# EUROPEAN PATENT APPLICATION

(11) **EP 1 630 763 A2**
(43) Date of publication of application: **01.03.2006**
(21) Application number: 04257444.2
(22) Date of filing: 30.11.2004
(51) Int. Cl.: G08C 23/04

(54) **Switching apparatus, electronic apparatus, data transfer method, and computer product**

(30) Priority: 25.08.2004 JP 2004244937
(71) Applicant: FUJITSU LIMITED, Kawasaki-shi, Kanagawa 211-8588 (JP)
(72) Inventor: Sasaki, Noriyuki, Fujitsu Limited, Kawasaki-shi, Kanagawa 211-8588 (JP)
(74) Representative: Hitching, Peter Matthew

(57) **Abstract**

A switching apparatus that switches outputs of a plurality of electronic apparatuses (10, 810) controlled by a remote controller (30) includes a data receiving unit (143) that receives data for controlling the electronic apparatuses (10, 810) from the remote controller (30); and a data transferring unit (144) that transfers the data to the electronic apparatuses (10,810) according to a switching status of the switching apparatus.

## Description

### BACKGROUND OF THE INVENTION

### 1) Field of the Invention

The present invention relates to a switching apparatus that switches outputs of a plurality of electronic apparatuses that are controlled by a remote controller, an electronic apparatus, a data transfer method, and a computer product that makes a computer execute the method.

### 2) Description of the Related Art

Recently, personal computers are increasingly operated by a remote. Some monitors that display a personal computer screen has a television (TV) function, and such television function is also operated by the remote.

The remote may be provided separately for the personal computer and for the monitor. In another technology, a switch that switches an object, which is in this case, the personal computer or the monitor, to be controlled by the remote may be provided in a single remote, enabling a user to select the object to be controlled. Such technology is disclosed in, for example, "Instant Television Function Instruction Manual" , FUJITSU, FMV Deskpower, T-series, B6FH-1841-01.

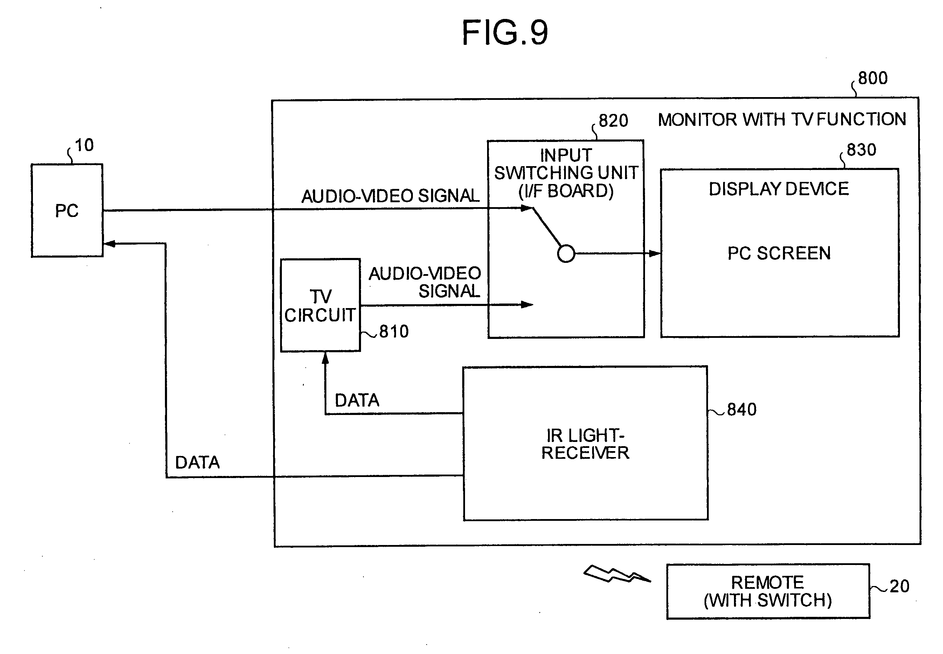

Fig. 9 is a block diagram of a monitor with a TV function. A monitor with TV function 800 includes a TV circuit 810, an input switching unit 820, a display device 830, and an infrared (IR) light-receiver 840.

The TV circuit 810 receives TV waves, selects a program of a television station specified by a user, and outputs an audio-video signal thereof to the input switching unit 820.

Audio-video signals are input into the input switching unit 820 from the TV circuit 810 and from a personal computer (PC) 10. The input switching unit 820 switches between the audio-video signal from the TV circuit 810 and the audio-video signal from the PC 10 to output one of the audio-video signals to the display device 830.

The display device 830 displays the audio-video signal output by the input switching unit 820, and displays the audio-video signal on the PC screen or the television screen.

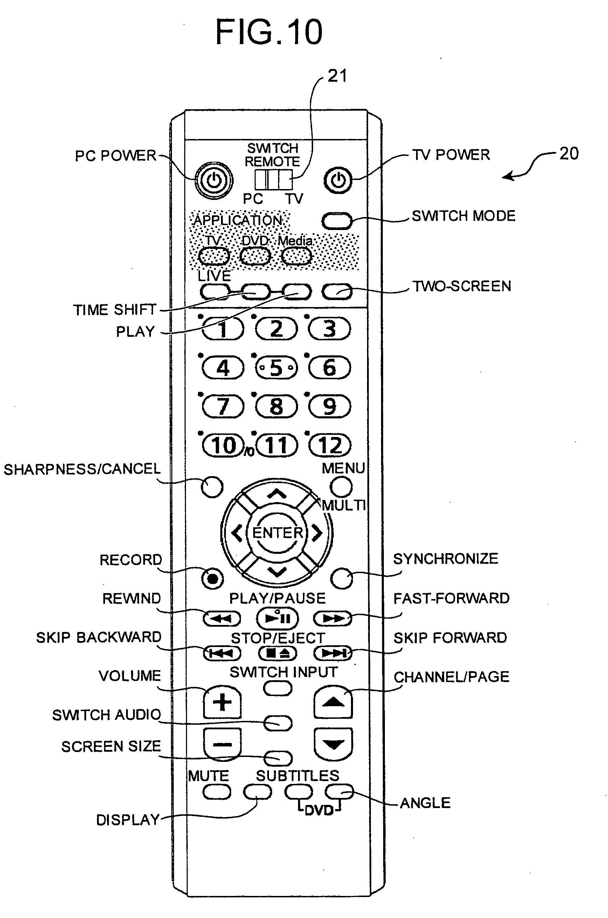

The IR light-receiver 840 is a processor that receives data, transmitted by the remote 20 using infrared rays, and transfers the data received to the PC 10 or the TV circuit 810. As shown in Fig. 10, the remote 20 includes a switch 21 for selecting the object to be controlled, a code that indicates the object selected by the switch 21 being incorporated into the data and transmitted with the data. That is, the remote 20 transmits data containing a code that differs according to a status of the switch, even when the remote 20 is manipulated by a same operation. Consequently, the IR light-receiver 840 can transfer the data to the PC 10 or to the TV circuit 810 based on the code.

However, the conventional remote 20 has a disadvantage of poor usability, since the object to be controlled must be selected by using the switch 21. Specifically, if the user forgets to manipulate the switch 21, there is a possibility that the PC 10 or the TV function in an unintended way.

For example, when the user forgets that the PC 10 is the object being controlled by the remote 20, and manipulates the remote 20 while watching TV in an attempt to control the TV, the PC 10 is mistakenly controlled, potentially causing problems such as deletion of data. Even in an attempt to adjust the volume, the data flows to the PC 10, so that the volume is not adjusted no matter how the remote 20 is manipulated.

### SUMMARY OF THE INVENTION

It is an object of the present invention to solve at least the above problems in the conventional technology.

A switching apparatus that switches outputs of a plurality of electronic apparatuses controlled by a remote controller according to one aspect of the present invention includes a data receiving unit that receives data for controlling the electronic apparatuses from the remote controller; and a data transferring unit that transfers the data to the electronic apparatuses according to a switching status of the switching apparatus.

An electronic apparatus according to another aspect of the present invention includes a plurality of output units; a data receiving unit that receives data for controlling the output units from a remote controller; a switching unit that switches outputs of the output units; and a data transferring unit that transfers the data to the output units according to a switching status of the switching unit.

A data transferring method according to still another aspect of the present invention includes receiving data for controlling a plurality of output apparatuses from a remote controller; switching outputs of the output apparatuses; and transferring the data to the output apparatuses according to a switching result at the switching.

A computer-readable recording medium according to still another aspect of the present invention stores a data transferring program that realizes a method according to the above aspect on a computer.

The other objects, features, and advantages of the present invention are specifically set forth in or will become apparent from the following detailed description of the invention when read in conjunction with the accompanying drawings.

### BRIEF DESCRIPTION OF THE DRAWINGS

Fig. 1 is a block diagram of a monitor with a TV function according to a first embodiment of the present invention;
Fig. 2 is a schematic of a remote without a switch for switching an object to be controlled;
Fig. 3 is a flowchart of a data reception processing;
Fig. 4 is a block diagram of a monitor with a TV function according to a second embodiment of the present invention;
Fig. 5 is a block diagram of a monitor with a TV function according to a third embodiment of the present invention;

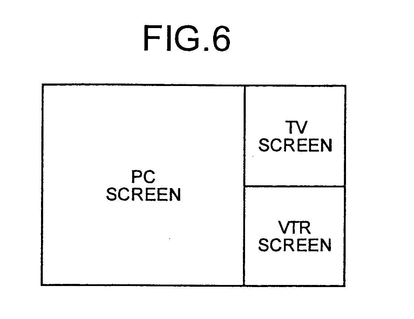

Fig. 6 is a schematic of a monitor screen that displays a plurality of images;
Fig. 7 is a block diagram of a monitor with a TV function according to a fourth embodiment of the present invention;
Fig. 8 is a block diagram of a computer that executes a remote data-transfer program according to the first to the fourth embodiments;
Fig. 9 is a block diagram of a monitor with a TV function; and
Fig. 10 is a schematic of a remote with a switch for switching an object to be controlled.

### DETAILED DESCRIPTION

Exemplary embodiments of a switching apparatus, an electronic apparatus, a data transfer method, and a computer program that makes a computer execute the method according to the present invention will be explained in detail with reference to the accompanying drawing. While the following explanation chiefly describes an embodiment in which a personal computer outputs an audio-video signal to a monitor apparatus, other data such as text data may be output instead.

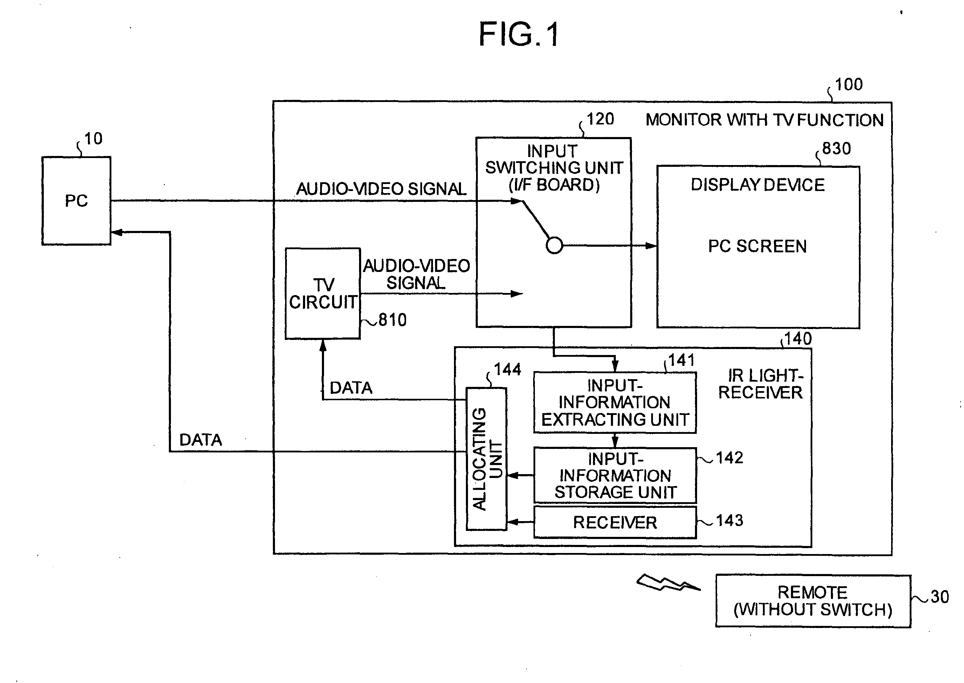

Fig. 1 is a block diagram of a monitor with a TV function according to a first embodiment of the present invention. To simplify the explanation, in the drawing, like reference numerals designate like parts having an identical function as those shown in Fig. 9, and are not explained further.

As shown in Fig. 1, a monitor 100 with a TV function includes a TV circuit 810, an input switching unit 120, a display device 830, and an IR light-receiver 140.

The input switching unit 120, similarly to the input switching unit 820, switches between audio-video signals from a PC 10 and the TV circuit 810, and outputs to the display device 830. The input switching unit 120 notifies the IR light-receiver 140 of its current switch status, that is, whether the audio-video signal output to the display device 830 is input from the PC 10 or the TV circuit 810.

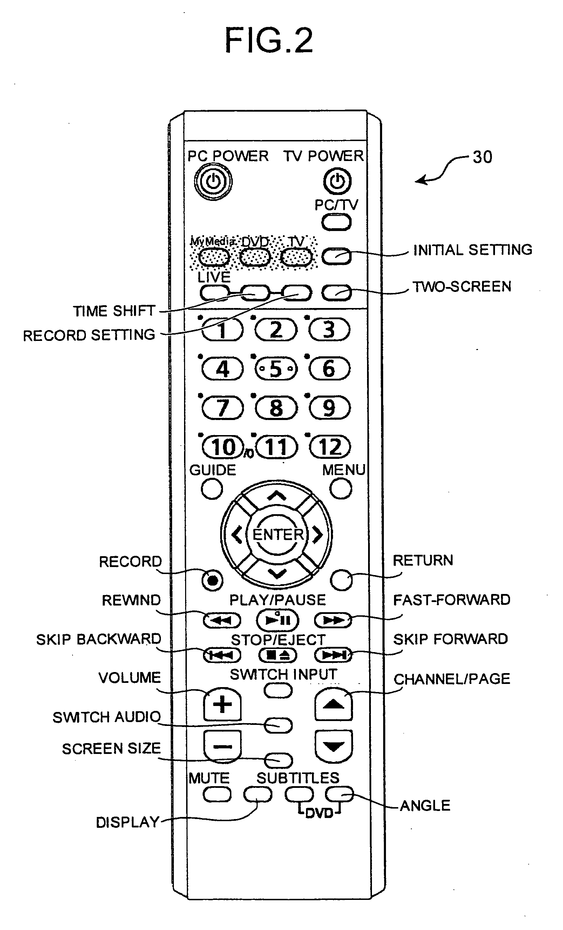

The IR light-receiver 140, similarly to the IR light-receiver 840, is a processor that receives data, transmitted from a remote 30 using infrared rays, and transfers the data received to the PC 10 or the TV circuit 810. As shown in Fig. 2, the remote 30 differs from the remote 20 in which the remote 30 has no switch for switching an object to be controlled. Since the data transmitted from the remote 30 does not contain data indicating the object to be controlled, the IR light-receiver 140 determines a transfer destination for the data based on the switch status notified from the input switching unit 120.

The IR light-receiver 140 includes an input-information extracting unit 141, an input-information storage unit 142, a receiver 143, and an allocating unit 144.

The input-information extracting unit 141 extracts the switch status to store the switch status in the input-information storage unit 142. The input-information storage unit 142 stores the switch status extracted.

The receiver 143 receives data transmitted from the remote 30 using infrared rays, and passes the data received to the allocating unit 144. The allocating unit 144 transfers the data extracted to the PC 10 or the TV circuit 810 based on the switch status stored in the input-information storage unit 142.

Since the allocating unit 144 automatically transfers the data to the PC 10 or the TV circuit 810 based on the switch status stored in the input-information storage unit 142, the switch to select the object is not necessary in the remote 30.

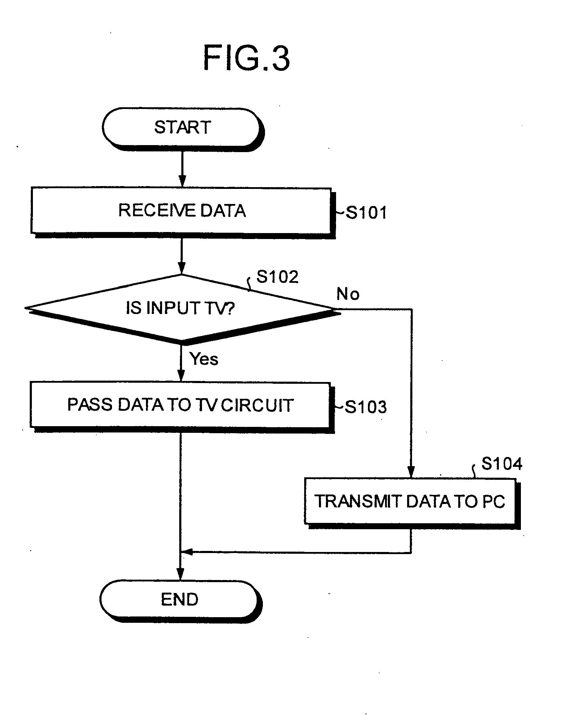

Fig. 3 is a flowchart of a data reception processing executed by the IR light-receiver 140. As shown in Fig. 3, the receiver 143 of the IR light-receiver 140 receives data from the remote 30 (step S101), and the allocating unit 144 uses the switch status stored in the input-information storage unit 142 to determine whether the input from the input switching unit 120 is an audio-video signal from the TV circuit 810 or from the PC 10 (step S102).

When the input from the input switching unit 120 is the audio-video signal from the TV circuit 810, the data is passed to the TV circuit 810 (step S103), and when the input is the audio-video signal from the PC 10, the data is transmitted to the PC 10 (step S104).

In this way, the allocating unit 144 uses the switch status stored in the input-information storage unit 142 to determine whether the input switching unit 120 is inputting an audio-video signal from the TV circuit 810 or from the PC 10, and transfers the data to the TV circuit 810 or the PC 10 based on a determination result. Thus, a function to switch the object to be controlled is not required to be provided in the remote 30.

As described above, in the first embodiment, the IR light-receiver 140 determines whether a screen displayed by the display device 830 is a PC screen or a television screen based on the switch status of the input switching unit 120, and the data is transferred to the TV circuit 810 or the PC 10 based on the screen that is displayed by the display device 830. This enables the switch to be removed from the remote 30, thereby improving the usability.

In the first embodiment, the IR light-receiver 140 transfers data to the TV circuit 810 or the PC 10 based on the switch status of the input switching unit 120. However, instead of the IR light-receiver 140, the input switching unit 120 can transfer the data to the TV circuit 810 or the PC 10 based on the switch status of the input switching unit 120.

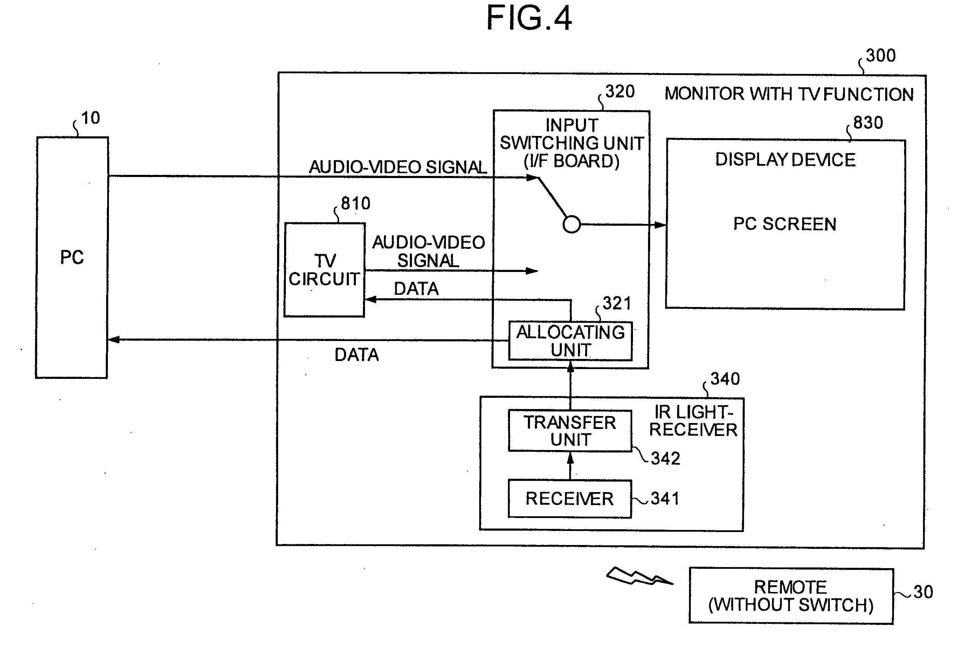

Fig. 4 is a block diagram of a monitor with a TV function according to a second embodiment of the present invention. To simplify the explanation, in the drawing, like reference numerals designate like parts having the same function as those shown in Fig. 1, and are not explained further.

As shown in Fig. 4, a monitor with TV function 300 includes the TV circuit 810, an input switching unit 320, the display device 830, and an IR light-receiver 340.

The input switching unit 320, similarly to the input switching unit 120, switches between an audio-video signal from the PC 10 and an audio-video signal from the TV circuit 810 to output to the display device 830. The input switching unit 320 also includes an allocating unit 321 that allocates the data received by the IR light-receiver 340 to the PC 10 or the TV circuit 810 based on the current switch status.

The allocating unit 321 automatically allocates the data, received to the PC 10 or the TV circuit 810 based on the current switch status, the switch to select the object is not necessary in the remote 30.

The IR light-receiver 340 receives data transmitted from the remote 30 using infrared rays and transfers the data to the input switching unit 320. The IR light-receiver 340 includes a receiver 341 and a transfer unit 342. The receiver 341 receives data transmitted from the remote 30 using infrared rays. The transfer unit 342 transfers the data received to the input switching unit 320.

As described above, in the second embodiment, the input switching unit 320 transfers data to the TV circuit 810 or the PC 10 based on whether a screen displayed by the display device 830 is a PC screen or a television screen. This enables the switch to be removed from the remote 30, thereby improving the usability.

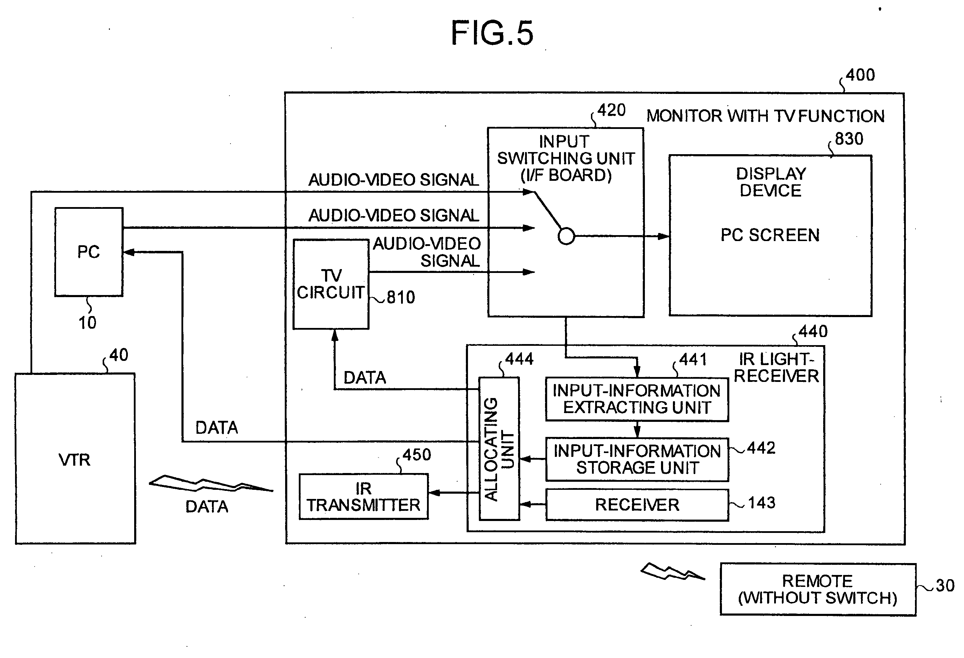

Fig. 5 is a block diagram of a monitor with a TV function according to a third embodiment of the present invention. To simplify the explanation, in the drawing, like reference numerals designate like parts having the same function as those shown in Fig. 1, and are not explained further.

As shown in Fig. 5, a monitor 400 with a TV function includes the TV circuit 810, an input switching unit 420, the display device 830, an IR light-receiver 440, and an IR transmitter 450.

The input switching unit 420 switches between an audio-video signal from the PC 10, an audio-video signal from the TV circuit 810, and an audio-video signal from a VTR (videotape recorder) 40 to output to the display device 830. The input switching unit 420 also notifies the IR light-receiver 440 of its current switch status.

The IR light-receiver 440, similarly to the IR light-receiver 140, receives data, transmitted from the remote 30 using infrared rays, while transferring the data received to the PC 10, the TV circuit 810, or the VTR 40.

The IR light-receiver 440 includes an input-information extracting unit 441, an input-information storage unit 442, the receiver 143, and an allocating unit 444. The IR light-receiver 440 has the same functions as the IR light-receiver 140, with the exception that the transfer destination of the data received by the receiver 143 and the switch status notified from the input switching unit 420 includes the VTR 40 in addition to the PC 10 and the TV circuit 810.

The IR transmitter 450 uses infrared rays to transfer the data, received by the IR light-receiver 440 from the remote 30, to the VTR 40 when the screen displayed by the display device 830 is a VTR screen.

As described above, in the third embodiment, the IR light-receiver 440 determines whether a screen displayed by the display device 830 is a PC screen, a television screen, or a VTR screen, based on the switch status of the input switching unit 420, and transfers data to the TV circuit 810, the PC 10, or the VTR 40, based on the screen displayed by the display device 830. This enables a switch for three apparatuses to be removed from the remote 30, thereby improving the usability.

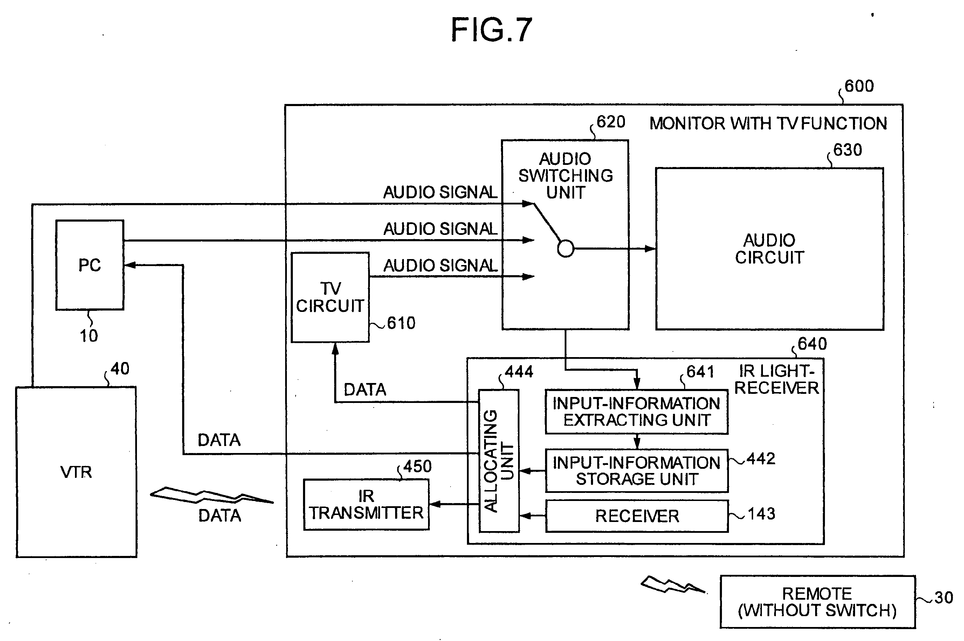

Fig. 7 is a block diagram of a monitor with a TV function according to a fourth embodiment of the present invention. As shown in Fig. 7, a monitor 600 with a TV function includes a TV circuit 610, an audio switcher 620, an audio circuit 630, an IR light-receiver 640, and an IR transmitter 650.

The TV circuit 610 receives television waves, selects a program of a television station specified by a user, and outputs an audio signal thereof to the audio switcher 620.

When the PC screen, the TV screen, and the VTR screen are being displayed simultaneously, the audio switcher 620 switches between an audio signal from the PC 10, an audio signal from the TV circuit 610, and an audio signal from the VTR 40, and outputs to the audio circuit 630. The audio switcher 620 also notifies the IR light-receiver 640 of its current audio switch status.

The audio circuit 630 outputs sound by using the audio signal output from the audio switcher 620, and outputs sound corresponding to any one of the PC screen, the television screen, and the VTR screen.

The IR light-receiver 640, similarly to the IR light-receiver 440, receives data transmitted by the remote 30 using infrared rays, while transferring the data received to the PC 10, the TV circuit 610, or the VTR 40, based on the audio switch status notified from the audio switcher 620.

The IR transmitter 650, when the sound output by the audio circuit 630 corresponds to the VTR screen, transfers the data received from the remote 30 by the IR light-receiver 640 to the VTR 40 using infrared rays.

As described above, in the fourth embodiment, the IR light-receiver 640 determines whether the sound output by the audio circuit 630 corresponds to the PC screen, the television screen, or the VTR screen, based on the switch status of the audio switcher 620, and transfers the data to the TV circuit 610, the PC 10, or the VTR 40, based on the sound output by the audio circuit 630. Therefore, the object to be controlled by the remote 30 can be identified even when the monitor is simultaneously displaying a plurality of screens, thereby enabling the switch to be removed from the remote 30.

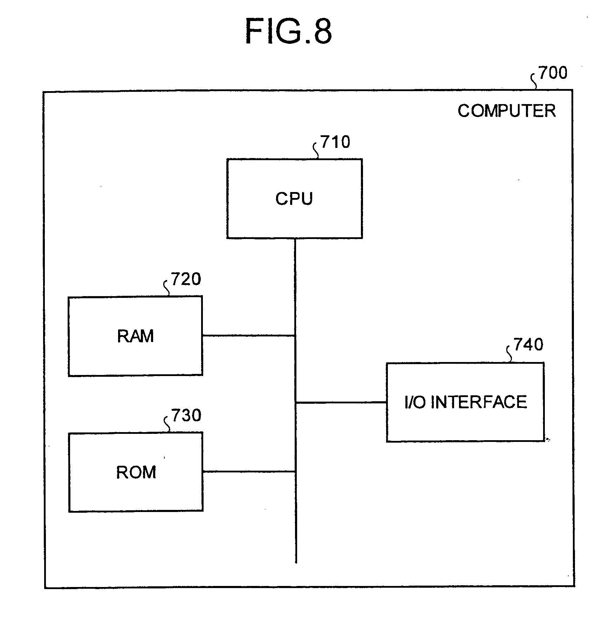

Fig. 8 is a block diagram of a computer that executes a remote data-transfer program according to the first to the fourth embodiments. As shown in Fig. 8, a computer 700 includes a CPU (central processing unit) 710, a RAM (random access memory) 720, a ROM (read-only memory) 730, and an input/output (I/O) interface 740.

The CPU 710 executes the remote data-transfer program, and the RAM 720 stores results during execution of the program. The ROM 730 stores the remote data-transfer program, and the I/O interface 740 connects hardware that receives infrared rays and a TV circuit to the computer 700.

Although the first to the fourth embodiments explain about a monitor with a TV function, the present invention is not limited to this, and can be similarly applied when a monitor without a TV function is connected to a TV device together with a PC.

Although the first to the fourth embodiments describe the combination of a personal computer and a monitor with a TV function, the present invention is not limited to this, and may be similarly applied when an electronic apparatus other than a PC is combined with a switching apparatus or an output apparatus other than a monitor with a TV function.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A switching apparatus that switches outputs of a plurality of electronic apparatuses controlled by a remote controller, the switching apparatus comprising:
a data receiving unit that receives data for controlling the electronic apparatuses from the remote controller; and
a data transferring unit that transfers the data to the electronic apparatuses according to a switching status of the switching apparatus.

2. The switching apparatus according to claim 1, wherein
the electronic apparatuses output a plurality of types of outputs to the switching apparatus, and
the data transferring unit transfers the data to the electronic apparatuses according to the types of the outputs.

3. The switching apparatus according to claim 2, wherein the outputs include an audio output and a video output.

4. The switching apparatus according to claim 1, wherein the data transferring unit transfers the data to the electronic apparatuses according to the switching status for an audio.

5. The switching apparatus according to claim 1, wherein the outputs of the electronic apparatuses are combined together when the outputs are output.

6. An electronic apparatus comprising:
a plurality of output units;
a data receiving unit that receives data for controlling the output units from a remote controller;
a switching unit that switches outputs of the output units; and
a data transferring unit that transfers the data to the output units according to a switching status of the switching unit.

7. The electronic apparatus according to claim 6, wherein
the output units output a plurality of types of outputs to the switching unit, and
the data transferring unit transfers the data to the output units according to the types of the outputs.

8. The electronic apparatus according to claim 7, wherein the outputs include an audio output and a video output.

9. The electronic apparatus according to claim 6, wherein the data transferring unit transfers the data to the output units according to the switching status for an audio.

10. The electronic apparatus according to claim 6, wherein the outputs of the electronic apparatuses are combined together when the outputs are output.

11. A data transferring method comprising:
receiving data for controlling a plurality of output apparatuses from a remote controller;
switching outputs of the output apparatuses; and
transferring the data to the output apparatuses according to a switching result at the switching.

12. The data transferring method according to claim 11, wherein
a plurality of types of outputs are switched at the switching, and
the data is transferred to the output apparatuses according to the types of the outputs.

13. The data transferring method according to claim 12, wherein the outputs include an audio output and a video output.

14. The data transferring method according to claim 11, wherein the data is transferred to the output apparatuses according to a switching status for an audio.

15. The data transfer method according to claim 11, wherein the outputs of the electronic apparatuses are combined together when the outputs are output.

16. A computer-readable recording medium that stores a data transferring program making a computer execute:
receiving data for controlling a plurality of output apparatuses from a remote controller;
switching outputs of the output apparatuses; and
transferring the data to the output apparatuses according to a switching result at the switching.

17. The computer-readable recording medium according to claim 16, wherein
a plurality of types of outputs are switched at the switching, and
the data is transferred to the output apparatuses according to the types of the outputs.

18. The computer-readable recording medium according to claim 17, wherein the outputs include an audio output and a video output.

19. The computer-readable recording medium according to claim 16, wherein the data is transferred to the output apparatuses according to a switching status for an audio.

20. The computer-readable recording medium according to claim 16, wherein the outputs of the electronic apparatuses are combined together when the outputs are output.
